# EUROPEAN PATENT SPECIFICATION

(11) **EP 3 327 887 B1**
(45) Date of publication and mention of the grant of the patent: **23.09.2020**
(21) Application number: 17020553.8
(22) Date of filing: 29.11.2017
(51) Int. Cl.: H02J 3/32, H02J 3/38

(54) **MANAGEMENT APPARATUS OF CONNECTED ELECTRIC ENERGY SOURCES AND LOADS AND APPARATUS MANAGEMENT METHOD**
VORRICHTUNG ZUM VERWALTEN VON MITEINANDER VERBUNDENEN ENERGIEQUELLEN UND LASTEN SOWIE VERWALTUNGSVERFAHREN
APPAREIL DE GESTION POUR GÉRER DES SOURCES D'ÉNERGIE ET DES CHARGES CONNECTÉES ET PROCÉDURE DE GESTION

(30) Priority: 29.11.2016 IT 201600121062
(43) Date of publication of application: 30.05.2018
(73) Proprietor: Une Srl, 42015 Correggio (RE) (IT)
(72) Inventor: Scaltriti, Giuliano, 42015 Correggio (RE) (IT)
(74) Representative: Gasparini, Alberto

(56) References cited:
- EP-A1- 2 650 840
- US-A1- 2002 143 438
- US-A1- 2012 235 631

## Description

### Field of the invention

The present invention relates to a logic switch apparatus for managing electrical energy sources in alternating current and connected utilities, which, depending on the user's will, establishes the connection, for an optimal use of the energy produced in a distributed way by the energy sources both in direct current and in alternating current, also and especially coming from renewable sources, with an interchange coming from and towards a public network and from and towards a private network in alternating current of exchange of the produced or stored energy in alternating current, and a local or distributed use of the same energy within the private network. It also comprises the logic instructions of assessment and exchange of the energy in alternating current that crosses the apparatus on the inside from and towards the private network and/or from and towards the public network.

### Prior art

The prior art comprises apparatuses for the production of electrical energy from renewable sources such as solar energy, wind energy, tidal energy or even energy distributed with public electrical networks coming from the most varied sources. It is also known that the energy produced and available on public networks has variations that depend on the same source as a limitation, for example presence of variable sunshine or presence of variability of the wind in such a way as to make it necessary to store the energy produced in excess and not consumed at the moment of production.

Moreover, in the art, devices for storing electrical energy in the form of high-capacity and high-efficiency storage batteries are known, which can store the electrical energy and make it available subsequently upon user request.

The realization of a device for storing and managing energy is described, for example, in the document IT 1424534, which configures an apparatus of electrical connection between a battery for storing electrical energy with molten salts and a plant for producing energy from a renewable source, such as a photovoltaic or wind power plant, wherein the mode for keeping the molten salt battery excited and active, that is to say, intended to absorb the excess energy produced by the plant, as well as to transfer it, with respect to that which the user can use in that moment for own consumption, is described.

Moreover, it is known that all the plants of self-production of electrical energy from a renewable source enable the transfer of the energy produced to the public network at agreed prices. The transfer of the self-produced electrical energy is regulated by law, in different ways as well, from country to country.

The prior art document EP 2650840 A1 discloses a management system of a household user that produces and sells electrical energy. The production occurs with energy from a renewable source and is stored in place with a direct current battery and also exchanged with the public network in alternating current in the usual way known in the art. Moreover, this document also provides a different way of exchanging electrical energy between users. In fact, in order to nullify the losses of electrical energy in the conversion from direct current to alternating current the document describes a local network in direct current where the connected users exchange direct electrical energy, practically with a direct connection between their own storage systems in direct current. Moreover, the exchange is carried out in complex way, it being necessary to realize a specific direct current line for the transfer of electrical energy and a different direct current line for the collection of electrical energy. The check and information of the completed transfer or collection occurs on a data line that logically connects the apparatuses with conversion-inversion of the direct current-alternating current electrical energy in a bi-directional way. So, the user locally manages an own usual network in alternating current as well an additional network in direct current.

From the above, the prior art document, although committed to the specific energy saving in the conversion from direct current in alternating current of the energy that the user wants to transfer, also, as known, with limited conversion loss (2%), complicates the management of energy on a private network making it necessary for the network itself to have a double connection: one for energy transfer and another one for the collection of direct electrical energy. The user then, wishing to keep saving in the conversion of energy, must develop their own direct current local internal network, as it is shown in the various figures of the document, in parallel to the usual local internal network of the user in alternating current, where the various electrical loads of their utility are connected as any household or final user.

Finally, a considerable limit provided by the prior art document lies in the limited development that a direct current distribution network may have, with the additional drawback that each local user is at the same level of management of the network as the others users connected to said network. That is to say, no user being able to prevail-transfer electrical energy towards the other users on the management of the electric power in direct current, that is to say, operating on one single level of sharing of the electrical energy and of the exchanges associated with it.

From what has been described above, therefore, no device is known, which may be connected to a local system of energy production, also and especially of energy from a renewable source, as well as provided with a device for the local storage of the energy produced, and that can be put in a limited or complex local network in alternating current in order to make available on the local network, or proprietary network, the energy produced in excess and that is not worth, due to the limited economic advantage, being transferred to a public network but can be distributed by means of said local network, or proprietary network, to other users already directly in alternating current and that make their own use thereof both for the consumption and to increase the storage of electrical energy on their own system.

Such prior art is susceptible of significant improvements as to the possibility to realize an apparatus that, when connected to the local production system of the user, to a local or proprietary network in alternating current and/or also to a public network, can decide from time to time the advantage, in a planned period of time, of transferring or collecting electrical energy to and from the local or proprietary network and if necessary to be connected to the public network following the programming by the user.

Therefore, the technical problem that is at the basis of the present invention consists in providing a logic switch apparatus that manages the power connections for the transfer of electrical energy in alternating current inside the user's system, to and from a local or private network in alternating current and to or from a public network, that is to say, it making it possible to carry out a dynamic management of the energy in alternating current available to a utility served by multiple sources, all already complying with the local electrical standard in the user's system.

A further aim related to the previous technical problem consists in realizing a management logic that is functional and modifiable by the user with intervention limits or thresholds to connect, in very short time, the power terminals of the local production, of the connection towards a private network in alternating current and also towards a public network.

Moreover, an aim related to the previous one consists in searching for a logic connection of data transmission that can interface all the component installations, obviously managed by a respective local logic board, the local network or private network in alternating current, for the interchange inside the private network and towards or from a public network, which is connected in any of the components of the local or private network, that is to say, it makes it possible to automatically create a smart network between multiple utilities, each of which is managed by the same logic switch apparatus and all gathered at an upper level by a logic switch that keeps the connections present in the underlying local or private network into account.

Finally, an additional specific part of the technical problem set forth above concerns the realization of a local or private network in alternating current in a simple and inexpensive way, which allows users to operate in power connection with each other, able to manage the energy flows coming from different sources on the basis of user requirements, which will be determined by economic advantages and by the current regulations on electrical energy distribution in alternating current specified by the laws of the country in which the system is made, using the transfer of energy outside the private network, that is to say, towards a public network after meeting the energy requirements inside the local or private network.

### Summary of the invention

This technical problem is solved, according to the present invention, by a logic switch apparatus for managing energy sources and connected utilities in alternating current according to claim 1.

In a preferred embodiment the logic switch apparatus has at least one electrical power line in alternating current afferent to the node connected in a bi-directional way for the transfer-collection of electrical energy in alternating current with a storage battery apparatus; the digital line of data exchange is also connected to the local storage battery.

In a preferred embodiment variant: at least one electrical power line afferent to the node is connected for the transfer to the node of the electrical energy in alternating current produced by a local generator; the local generator can be connected on a separate electrical power line afferent to the node or joined on the same electrical power line in alternating current of a local storage battery; the digital line of data exchange is also connected to the local generator and/or also to the local storage battery.

In a preferred embodiment: at least one electrical power line afferent to the node is connected in bi-directional way for the transfer-collection of electrical energy in alternating current with an electrical network resulting from the multiple connection of multiple logic switch apparatuses, each provided with a logic board, to gather in a local or private network in alternating current multiple users that are producers or accumulators on their own or even simple consumers of the electrical energy available and used in common in the local or private network in alternating current.

A preferred embodiment: the logic switch apparatus has multiple local or private networks interconnected for the exchange of electrical energy in alternating current on a power line and for the exchange of data on an operating data exchange line of each logic switch apparatus, or logic board, connected to constitute a proprietary network in which the production, the storage and the consumption of the electrical energy in alternating current are managed in a common way on the basis of the management and control logic of each logic board present in the proprietary network; the management of the connection in alternating current between the local or private network and the proprietary network can occur by means of a main logic board of management of a level higher than said local level.

Moreover, in a preferred embodiment: in the logic switch apparatus on one of the electrical power lines afferent to the node, present in the logic board, the electrical energy public distribution network is connected for a bi-directional exchange.

A method is provided for managing said logic switch apparatus according to claim 7.

Furthermore, in a preferred embodiment of said management method by the use of a logic switch apparatus, the logic board by means of the electronic logic also detects:
- charge status of the storage apparatus, read through the logic line of internal data communication connected to the storage;
- additional power/energy available in the local storage calculated internally by the electronic logic.

Moreover, in a specific application of the invention: in the management of the logic switch apparatus, the logic board by means of the electronic logic also detects:
- charge status of the storage apparatus, read through the logic line of internal data communication connected to the storage;
- production of the local generator, read through the logic line of internal data communication connected to the generator optionally by means of the storage;
- additional power/energy available in the local storage and/or production calculated internally by the electronic logic.

Finally, in a form of improved management of the logic switch apparatus each logic board by means of the electronic logic records, during operation, the times and electrical data of transfer or collection of electrical energy in alternating current on each of the electrical power lines in alternating current afferent to the node in suitable internal registers in the electronic logic; moreover, for established periods of time (day, week, month, year) in the management of the local/private/proprietary network, the logic board communicates or shows the energy accounting of said internal registers with a balance of the exchange of energy of the user on said electrical power lines.

Further features and the advantages of the present invention, in the realization of a logic switch apparatus for managing electrical energy sources and connected utilities, will be evident from the following description, comprising the basic instructions to the management logic, given as an indicative and non-exhaustive example with reference to the two enclosed drawing tables.

### Short description of the drawings

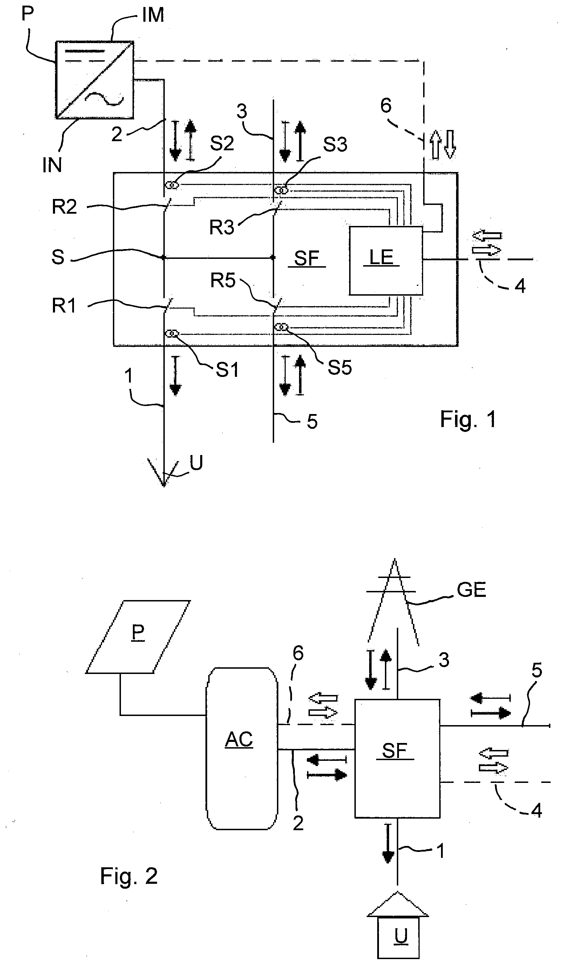

Figure 1 shows an internal layout of a logic switch apparatus that controls the connections of the local production, of the local consumption of electrical energy, for meeting the requirements of the local user, and the power connection towards one or more public external network or local or private network connections; the logic connections are also indicated, for the exchange of data in the management of the production and/or storage of electrical energy locally and of interchange of data with other users belonging to the local or private network in alternating current;
Figure 2 shows an external layout of the connections of the logic switch apparatus at the local user, that has all the possible connections to the logic switch apparatus, manager of the local power connections external to the local installation;

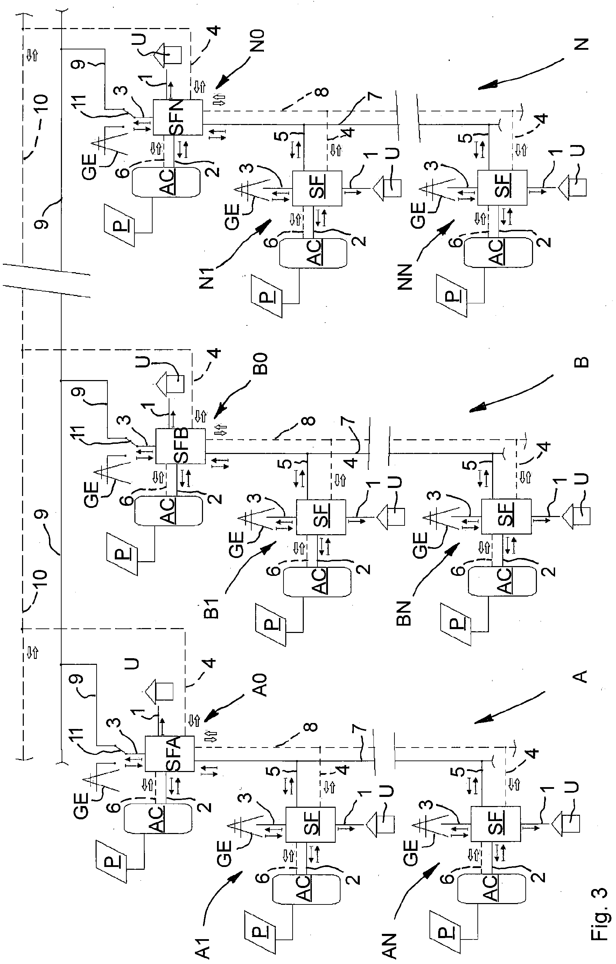

Figure 3 shows a multi-level layout of the connections of sets, also variable in the number of local participants in each set, also physically distant or separate from each other, that, for the interchange of their own operating data towards the private network or local network in alternating current, creates it with the adoption of the logic switch apparatus in the local nodes, intermediate at the level of the private network, or of management of a group of local users interconnected to each other, according to the invention, in each local installation carried out and, advantageously, also interconnected with other groups of local users in the private network being established.

### Description of one of the embodiment of the invention

Figure 1 shows the logic board SF constituting the switch apparatus wherein 1 indicates the electrical power connection only towards the usual local utility U; inside the logic board SF there is a node connection S, to which the line 1 is connected, which gathers the electrical power connection lines in alternating current to and from electrical power lines: 2, towards a local generator P of electrical energy advantageously from a renewable source, 3, towards an electrical - optionally public - network connection, and 5 towards a local electrical network connection called private or proprietary network in alternating current.

LE indicates a programmed or programmable electronic logic that manages the logic board SF and the connection node S or the disconnection between the electrical power lines afferent to said node. The management occurs by means of switches R1, R2, R3 and R5 controlled on each line afferent to the node depending on the logic coming from LE and also on the signal coming from the sensors S1, S2, S3 and S5, processed by the logic board, and which detect the electrical parameters downstream of the corresponding switch.

Reference 4 indicates a data transmission connection inside the local network or proprietary network, while 6 indicates a data transmission connection from the electronic logic LE to and from the logic of control and operation of the local generator P, which is advantageously integrated by a local storage apparatus IM of the energy produced in P or exchanged by means of the logic board SF; an inverter IN is provided in the local system of generation/storage of electrical energy to exchange electrical energy conditioned in the use parameters to the local electrical standard, in alternating current, of the local utility U or from and towards the external/public or local/private/proprietary network in alternating current.

Moreover, Figure 2 shows a battery storage apparatus AC of the generic type with batteries of various nature, which summarizes the combination of the inverter IN, bi-directional direct current-alternating current, and storage apparatus IM in a logic connection 6 to the logic board SF, for the exchange of data on the status of the local production system in the local generator P and/or storage in IM of the electrical energy in direct current; finally GE indicates a generic external electrical line in alternating current, optionally public, connected to the line 3 of the logic board SF.

In Figure 3 a generic complex network is schematically developed that, as depicted, consists of multiple sets of local systems A, B ... N of generation, storage, conditioning to the local electrical standard in alternating current and use, with which a logic board SF is associated, provided with the connections described in Figure 2, which enables the connection with a local electrical power line 7 to a local system that acts as a management or "master" system, called A0, B0 ... N0 in Figure 3, each provided with its own logic board SFA, SFB ..... SFN; it also receives the data of the local data connection 8 or line of interchange of the data coming from the components of the local systems A1 ... AN; B1 ... BN and finally N1 ... NN, connected to the local/private/proprietary network in alternating current, each of them by means of a local managing system.

The managing local systems A0, B0 ... N0 are connected to each other with an electrical power line 9, to constitute a private or proprietary network, in alternating current, of internal use of the energy produced and stored in it or in the groups of main systems, and with an operating data transmission line 10 of said main managing systems, including the interfaced operation of the corresponding local systems of each A1 ... AN; B1 ... BN and N1 ... NN. Finally, in Figure 3, each main managing system by means of the logic board SFA, SFB ... SFN is connected with its own power line 3 towards said line 9 or with a selector 11 towards an external network GE that can be public.

The operation of a local network or private network or proprietary network in alternating current, managed by a logic board SF in the service of residential, tertiary and light industrial electrical supply systems, which aims at realizing a dynamic management of energy available to utilities served by multiple electrical energy sources, is realized in a rapid way by the creation of a smart network of multiple utilities managed by the logic board SF installed in each connection node of a single user (A1 ... AN; B1 ... BN; N1 ... NN) and in the connection nodes of management of local systems A1 ... NN in their turn also gathered in local networks A ... N.

Thanks to the use in each local installation, of a single user or of locally connected users, of a logic board as described above, networks in alternating current are created, which can remain separate, also in very small realities with the possibility to subsequently expand them, with the connection in one single network up to a large number of users, by simply adapting from a physical point of view the infrastructure of line of transport of the electrical energy 9 and of the data 10 exchanged between the logic boards SF installed.

In order to increase flexibility the logic board is inserted in a point in which the electrical quantities have already been transformed at the level of the local electrical standard, in alternating current, in order not to be tied to any form of specific local energy management, the apparatus of production P and storage AC can be any one (for photovoltaic, wind energy production, etc., as well as for storage with batteries of various nature) also in direct current being associated with an inverter IN, provided that it has the technical characteristics to be correctly inserted in a standard network of the local electrical parameters: voltage, current and frequency, with which the network, local/private/proprietary, for the use made of electrical energy in alternating current, must comply.

In case of connection of the system to a public network or to a second private or proprietary network, by means of a connection or disconnection input managed by a logic board SF, it is possible to ensure the complete separation between the two networks so that they are never in parallel; or in case of need/agreements/compatibility between the managers of the connected networks the logic board SF can act as a bridge between two networks connecting them and realizing the interchange of energy in alternating current.

During operation there can be moments with all the absorption inside the local or private network satisfied with their specific request for energy at lower costs; in this case the multitude of logic boards SF, with the logic distributed in the logic boards present in the network, enables their connection to each other with the exchange of their own operating data, it being possible to carry out the transfer in the same network or networks or even towards a public network, for the transfer of energy in alternating current produced in excess with respect to consumption or storage, thus avoiding to turn-off or stop the local energy production source. In fact, the connection architecture shown in Figure 3 enables both the single direct connection of each user to the public electrical network GE line or also limiting the connection at the local management level A0, B0 ... N0 of multiple users and enables only said connection at a higher level of management of the connection of the electrical power line 9 to the public network GE of electrical supply.

For the preparation to the operation in a correct way of the electronic logic LE, a logic board SF must be connected at least: to a line 1 towards the utility U; moreover, to one of the sources line 2 and/or line 3 and/or line 5. The management carried out by the logic board increases in quality with the number of electrical energy sources in alternating current with different characteristics available. There may not be all said sources available, even only temporarily in case of breakdowns or of low production or of storage not able to dispense, or in a network we may not have to connect all kinds of sources to the same utility/logic board SF, the internal management of the electronic logic is adapted to what is present making the most of the available and active sources and utilities/output lines. Moreover, the logic board SF is described as provided with an electrical energy output line and a minimum of two electrical energy input/output lines. Given the constitution of the logic board SF one can connect to the node S a greater number of lines in alternating current, obviously not shown here for the sake of simplicity, but the control logic, programmed in each electronic logic LE of each logic board SF present in the network, can be provided to support a greater number of connection/disconnection lines for electrical energy of power on the node, present in each or only in some of the logic boards SF present in the local/private/proprietary network in alternating current.

The logic board SF, if used in the interconnected utilities, creates a smart network in alternating current in an automatic way by connecting to each other utilities/sources/local external networks with the above-described logic board. The connection occurs: by means of at least one power line 1 for the transfer of the electrical energy towards the system of use; by means of at least one power line 2 for the interchange with a local storage/generator; by means of at least one additional power line for the interchange of electrical energy with an external or local/private/proprietary network; by means of at least one line 4 or data transmission means for the exchange of the information of each local component connected to the local logic board SF, for a correct management of energy exchange in the network to which the logic board is connected.

The exchanged information also comprises the parameters that can be set for exchange, depending on the requirements and agreements of the users forming the local/private/proprietary network in alternating current, and must be set in the same way in every single logic board SF, otherwise the differently set logic board will be disconnected from the network.

The parameters that can be set by the user comprise:
- minimum charge level of the local battery storage to be able to transfer or collect electrical energy;
- minimum power supplied by the local generator to be able to activate the exchange of electrical energy;
- maximum quantity of electrical energy per day/week/month that every single local system/user can transfer onto the network;
- maximum instantaneous power that can be supplied by the user towards the local, private or proprietary network;
- maximum time of input on the local, private or proprietary network for every single user (A1 ... AN; B1 ... BN; N1 ... NN) inserted.

Further variables remain settable and flexible because, depending on the bounding conditions of the users of the so made local network (installation zone, power of the generator, positioning of the generator, type and size of storage, and the like) or on the trade agreements in force, the optimal settings for logic boards SF can be subjected to significant variations in the generation of a local/private/proprietary network in alternating current.

A diversification with an increase in flexibility can be made because the local systems present can have any equipment of components admitted by the logic board SF: for example in a local network in a block of flats the shared utility may not have an own production system, as it is present in the utilities of the systems of the residents, but only a storage system for storing the electrical energy transferred by the residents to supply the common utilities by means of the shared utility of the block of flats.

A generic operation of a complex network like that outlined in Figure 3 is enabled automatically after the check and operation with the logic described herein. Data communication with the logic boards SF connected to the network always and only occurs by means of a data line 4, 8 or 10. The connection depends on the status of the local system and on the participation granted by the manager of the local network with the adoption of the standard parameters of setting of each logic board SF intended to be connected to the network in alternate current.

Locally the electronic logic LE of each board SF processes the following data:
- charge status of the storage apparatus, read through the internal communication port 6 connected to the storage AC;
- production of the local generator P, read through the internal communication port 6 connected to the storage;
- additional power/energy available in the local storage production calculated internally by the electronic logic LE;
- power on line 1, relating to local instantaneous consumption, supplied by S1 and processed by the electronic logic LE;
- power on line 2, supplied by S2, power on line 3, supplied by S3, power on line 5, supplied by S5, and processed by the electronic logic LE, to control the actual power/energy afferent to the node S;
- obtainment of data on the statuses from other logic boards SF, on local or remote systems connected to the local/private/proprietary network in alternating current read through the data exchange connection 4 or 8 or even 10;
- on the basis of the values read and on the programming setting the electronic logic LE controls the power switches R1, R2, R5
- the electronic logic records, during operation, the times and electrical data of transfer or collection of electrical energy on each of the lines 1, 2, 3 or 5 afferent to the node S in suitable internal registers in the electronic logic LE;
- for established periods of time (day, week, month, year) in the management of the local/private/proprietary network in alternating current, the logic board SF communicates or shows the energy accounting of said internal registers with a balance of the exchange of energy of the user.

Describing the above-indicated operation, the latter occurs in a logic board SF of a generic local system, thus SF provides a datum corresponding to the theoretical additional energy available and that at that moment it is not using, calculated on the basis of the absorption of line 1, of the charge status of the storage apparatus AC and of the production of the local generator P and makes it available on the interchange connection 4, 8, 10 so that all the logic boards SF can read it. When the local logic board SF has no additional energy available (for example dead storage battery, high absorption of local consumption on the line 1, low production of the local generator P) it does not activate the transfer of energy because this datum is 0.

Therefore, said logic board SF before connecting line 5 checks whether there is a request for energy from other logic boards SF present in the local/private/proprietary network. If so, and in the presence of electrical parameters set to the standard, that is to say, a board that acts as a manager or "master" of the power network is present in the network, the logic board SF will connect in the user mode, the so-called "slave" mode, carrying out the synchronization with the already existing network; on the contrary, that is to say, in the absence of the standard voltage, it will connect in the manager or "master" mode, creating itself the voltage on the network of line 5.

If said logic board SF has no request for energy coming from line 5 (the request is made with an exchange of data, that is to say, of instructions on the data line), and there is a capacity of production of electrical energy by the local P that can no longer be stored in the storage battery apparatus AC and neither can be limited, the logic board SF will connect line 3 to transfer/sell it to an optional additional network in alternating current (public, if provided).

If the logic board SF is connected to line 3 as explained above, at the first request for energy coming from line 5, that is to say, by means of an exchange of data coming to the board SF on the data line 4, the board SF disconnects line 3 and connects line 5. The priority of transfer of the electrical energy is programmed with a transfer towards line 5 because it represents the most advantageous connection to the manager of the local/private/proprietary network in alternating current for the interchange of energy inside the group of users that participate therein.

If a connection towards a public network is not provided, the logic board SF, with electrical energy available for transfer, will decrease or will stop the production of energy by P and will remain on stand-by waiting for requests from the local/private/proprietary network, that is to say, from line 5, ready to immediately transfer energy in alternating current at any possible requests coming on the data line 4.

The level of local protection of a logic board limits the output power lower than the additional one, if the set threshold is exceeded, SF disconnects line 5. This protection can be customized according to settable values, necessary to ensure the maintenance of the charge of the local storage apparatus and meet the request for energy by the local utility U on line 1. That is to say, on a local level, priority is always given to the utility U and to the recharge of the storage apparatus AC.

In the most complete form of a generic complex network of local systems A1 .. NN, gathered in sets of local systems A ... N, advantageously they are managed with a logic board SFx that will guarantee a constant request for energy equal to the additional energy available on the network 7 to be transferred to a network 9 of a higher level (if also in the network at an upper level there is a request for consumption/storage). If there is no request it is possible to choose at any level to transfer/sell the electrical energy that one cannot consume/store, which in any case is produced, to an optional public network.

To conclude, the automatic management that is carried out, of the complex network made possible by the installation of a logic board SF in each node of the network, enables and highlights the accounting in the energy flows by means of the meters present in the logic LE, of each logic board, and placed on all the energy interchange lines afferent to the single logic board; in this way it is possible to manage the energy transfer/collection balances between the users of the whole complex network in alternating current.

The advantages of a logic switch apparatus for managing energy sources and connected utilities, according to the invention, can be summarized as follows.

The logic board SF automatically manages the distribution of electrical energy in alternating current in a network of users by simply making the necessary hardware connections between the lines 1, 2, 3 or 5 afferent to the node S of connection/disconnection between them in the logic board. The possible replication to infinity of the connection of users to the local, private network, which is also called proprietary, makes versatile and subsequently modifiable the installation of small local networks that, if required, can be inserted in a larger network, realizing a private network, and in their turn the latter can be inserted in a combination of private networks to constitute a proprietary network in alternating current that is managed in a unitary but transparent way and with the use of the electrical energy therein produced, stored and in transit in the most advantageous way for the users themselves.

That is to say, by the adoption of the logic board SF a new standard is obtained in the realization of the network of exchange of electrical energy in alternating current, which consists of a new method of rapid implementation of smart networks, which is easy, fast and low-cost, therefore within the reach of any new urban, agricultural, industrial settlement or with similar needs for connection of utilities which can be, in various ways, also producers and/or accumulators of electrical energy in alternating current as well as consumers.

That is to say, the automatic management of the electrical energy coming from multiple sources is managed in the local/private/proprietary network ensuring the best condition at the lowest cost and with the greatest efficiency of those available for the utility, moment by moment in the continuous operation of the network itself directly in alternating current in compliance with the local voltage and frequency parameters.

Said automatic management of the logic board SF comprises the possibility to manage the relation between two normally separate electrical networks allowing to:
- act as a bridge between the two networks if necessary/required ensuring a controlled interchange of energy;
- be a point of disconnecting between two networks preventing their connection when not required.

The advantages of said implementation system, along with low costs, easy installation and speed of implementation, achieves the aim of mass distribution of the smart networks leading to a spread of the small local networks of management of the electrical energy in alternating current with significant advantages deriving from the rational use of resources, in the lowering of supply costs and a gradual decrease in the energy production resources necessary to obtain the same results (greater yield of the energy sources).

By following the basic setting for the creation of said local/private/proprietary network in alternating current the users can exploit the energy produced and stored not by their generator and/or storage apparatus but by all the users present in said network, with no need to supply themselves from sources external to the network itself, such as a public network, avoiding to run out of energy in case of lack of energy from inactive supply sources in installations not served by the public network.

Obviously, in order to meet specific and contingent needs, a person skilled in the art can make several changes to the above-described logic switch apparatus for managing electrical energy sources and connected utilities, said changes being all contained within the scope of protection of the present invention as defined by the following claims.

## Claims

1. Logic switch apparatus (SF) for managing energy sources in alternating current and connected utilities (U) comprising: an electrical power circuit in which a first electrical power line (1) for transfer of electric energy in alternating current is connected to an electrical load (U); a second electrical power line (2) for transfer of electric energy in alternating current is connected to an electrical energy source (P); a third external power line (3) for transfer of electric energy in alternating current, which is connected to an optionally public network; a programmable electronic logic unit (LE) configured to connect or disconnect the electrical power connection between said lines depending on the received programming; **characterised in that it** includes a connection of at least one fourth electrical power line (5) for transfer of electric energy in alternating current, coming from an external electrical line or source, joined to the previous ones in a node (S) of electrical connection internal to the logic switch apparatus; the electronic logic unit configured to detect the status of each of first, second, third and fourth electrical power line connected to the node with line status sensors (S1, S2, S3, S5), one for each of the first, second, third and fourth power lines, which act as disconnecting switches, of each line in alternating current afferent to said node, each of said line status sensor configured to detect electrical parameters of the corresponding power line, particularly power, and to supply the detected power to the electronic logic unit; the electronic logic unit configured to enable the transfer or collection of electrical energy from at least two of said electrical power lines, that is to say, with the node (S) the electronic logic unit is configured to enable and to manage the bi-directional exchange of electrical energy on at least two of said lines afferent to the node; the functional parts of the apparatus: node (S), switches (R1, R2, R3, R5), sensors (S1, S2, S3, S5) processor of the electronic logic unit (LE) are gathered in one single logic board (SF) to which at least one digital data line (4, 6) is connected for the exchange of operating data between the local logic board (SF) and at least another logic board (SF), similar or identical and interfaceable, present and connected for the exchange of operating data and for the bi-directional exchange of electrical energy in alternating current by means of at least one of said electrical power lines with a transfer-collection of electrical energy in alternating current.

2. Logic switch apparatus, according to claim 1, wherein at least one electrical power line in alternating current (2) afferent to the node (S) is connected in a bi-directional way for the transfer-collection of electrical energy in alternating current with a storage battery apparatus (AC); the digital line of data exchange (6) is also connected to the local storage battery.

3. Logic switch apparatus, according to one of claims 1, 2, wherein at least one electrical power line (2) afferent to the node (S) is connected for the transfer to the node (S) of the electrical energy in alternating current produced by a local generator (P); the local generator can be connected on a separate electrical power line afferent to the node or joined on the same electrical power line in alternating current of a local storage battery (AC); the digital line of data exchange (6) is also connected to the local generator (P) and/or also to the local storage battery.

4. Logic switch apparatus, according to one of claims 1, 2, 3, wherein at least one electrical power line (5) afferent to the node (S) is connected in a bi-directional way for the transfer-collection of electrical energy in alternating current to an electrical network (7) resulting from the multiple connection of multiple logic switch apparatuses, each provided with a logic board (SF), to gather in a local or private network in alternating current multiple users that are producers or accumulators on their own or even simple consumers of the electrical energy available and used in common in the local or private network in alternating current.

5. Logic switch apparatus, according to claim 4, wherein multiple local or private networks (7) are interconnected for the exchange of electrical energy in alternating current on a power line (9) and for the exchange of data on an operating data exchange line (10) of each logic switch apparatus, or logic board (SF), connected to constitute a proprietary network in which the production, the storage and the consumption of the electrical energy in alternating current are managed in a common way on the basis of the logic of management and control of each logic board (SF) present in the proprietary network; the management of the connection in alternating current between the local or private network and the proprietary network can occur by means of a main logic board (SFA, SFB ... SFN) of management of a level higher than said local level.

6. Logic switch apparatus, according to one of the previous claims, wherein on one of the electrical power lines (3) afferent to the node (S), present in the logic board (SF), the electrical energy public distribution network is connected for a bi-directional exchange.

7. Method for managing a logic switch apparatus, according to claim 1, wherein the electronic logic (LE) present in the logic board (SF) detects:
- power collected on the first power line (1), relating to an instantaneous collection of alternating electrical energy by the electrical load (U), supplied by the corresponding sensor (S1);
- power exchanged on the bi-directional transfer-collection second, third and fourth power lines (2, 3, 5) to control the actual power/energy afferent to the node (S);
- obtainment of data on the statuses from other logic boards (SF), on local or remote systems connected to the network in alternating current read through the connection line for data exchange (4, 8 or 10);
- so the logic board processes, with the electronic logic (LE) on the basis of the values read and on the programming setting, and controls the power switches (R1, R2, R3, R5) for connection or disconnection.

8. Method for managing a logic switch apparatus, according to claim 7, wherein by the use of a logic switch apparatus according to claim 3, the logic board (SF) by means of the electronic logic (LE) also detects:
- charge status of the storage apparatus, read through the logic line of internal data communication (6) connected to the storage (AC);
- production of the local generator (P), read through the logic line of internal data communication (6) connected to the generator (P) optionally by means of the storage (AC);
- additional power/energy available in the local storage and/or production calculated internally by the electronic logic (LE).

9. Method for managing a logic switch apparatus, according to claim 7, wherein by the use of a logic switch apparatus according to claim 2, the logic board (SF) by means of the electronic logic (LE) also detects:
- charge status of the storage apparatus, read through the logic line of internal data communication (6) connected to the storage (AC);
- additional power/energy available in the local storage calculated internally by the electronic logic (LE).

10. Method for managing a logic switch apparatus, according to one of the previous claims 7, 8 or 9, wherein by the use of a logic switch apparatus according to one of claims 1, 2, 3, 4 or 5, the logic board (SF) by means of the electronic logic (LE) records, during operation, the times and electrical data of transfer or collection of electrical energy on each of the electrical power lines (1, 2, 3, 5) in alternating current afferent to the node (S) in suitable internal registers in the electronic logic; moreover, for established periods of time (day, week, month, year) in the management of the local/private/proprietary network, the logic board (SF) communicates or shows the energy accounting of said internal registers with a balance of the exchange of energy of the user on said electrical power lines.

## Patentansprüche

1. Logikschaltvorrichtung (SF) zum Verwalten von Energiequellen in Wechselstrom und angeschlossenen angeschlossene Benutzer (U) bestehend aus: einen Stromkreis, in dem eine erste Stromleitung (1) zur Übertragung elektrischer Energie in Wechselstrom mit einer elektrischen Last (U) verbunden ist; Eine zweite elektrische Stromleitung (2) zur Übertragung elektrischer Energie in Wechselstrom ist mit einer elektrischen Energiequelle (P) verbunden; eine dritte externe Stromleitung (3) zur Übertragung elektrischer Energie in Wechselstrom, die an ein optionales öffentliches Netz angeschlossen ist; eine programmierbare elektronische Logikeinheit (LE), die konfiguriert ist, um den Stromanschluss zwischen diesen Leitungen abhängig von der empfangenen Programmierung zu verbinden oder zu trennen; **dadurch gekennzeichnet, dass** es eine Verbindung von mindestens einer vierten elektrischen Stromleitung (5) zur Übertragung von elektrischer Energie in Wechselstrom enthält, die von einer externen elektrischen Leitung oder Quelle kommt und mit den vorherigen in einem Knoten (S) von elektrisch verbunden ist Verbindung innerhalb der Logikschaltervorrichtung; die elektronische Logikeinheit, die konfiguriert ist, um den Status jeder ersten, zweiten, dritten und vierten Stromleitung zu erfassen, die mit dem Knoten mit Leitungsstatussensoren (S 1, S2, S3, S5) verbunden ist, jeweils einen für die erste, zweite, dritte und vierte Stromleitungen, die als Trennschalter dienen, jeder Leitung in Wechselströmen, die für den Knoten afferent sind, wobei jeder der Leitungsstatussensoren konfiguriert ist, um elektrische Parameter der entsprechenden Stromleitung, insbesondere Leistung, zu erfassen und die erfasste Leistung an die elektronische Logikeinheit zu liefern; die elektronische Logikeinheit, die konfiguriert ist, um die Übertragung oder Sammlung elektrischer Energie von mindestens zwei der elektrischen Stromleitungen zu ermöglichen, d. h. die elektronische Logikeinheit mit dem Knoten (S) konfiguriert, um den bidirektionalen Austausch elektrischer Energie auf mindestens zwei der zum Knoten afferenten Leitungen zu ermöglichen und zu verwalten; die Funktionsteile der Vorrichtung: Knoten (S), Schalter (RI, R2, R3, R5), Sensoren (S 1, S2, S3, S5) Prozessor der elektronischen Logikeinheit (LE) sind in einer einzelnen Logikplatine (SF) zusammengefasst, an die mindestens eine digitale Datenleitung (4, 6) zum Austausch von Betriebsdaten zwischen der lokalen Logikplatine (SF) und mindestens einer anderen Logikplatine (SF) angeschlossen ist, ähnlich oder identisch und interfacierbar, vorhanden und verbunden für den Austausch von Betriebsdaten und zum bidirektionalen Austausch elektrischer Energie in Wechselstrom mittels mindestens einer der elektrischen Stromleitungen mit einer Übertragungssammlung elektrischer Energie in Wechselstrom.

2. Logikschaltvorrichtung nach Anspruch 1, wobei mindestens eine elektrische Stromleitung im Wechselstrom (2), die zu dem Knoten (S) afferent ist, bidirektional zur Übertragungssammlung elektrischer Energie im Wechselstrom mit eine Speicherbatterievorrichtung (AC) verbunden ist; Die digitale Datenaustauschleitung (6) ist ebenfalls mit der lokalen Speicherbatterie verbunden.

3. Logikschaltvorrichtung nach einem der Ansprüche 1, 2, wobei mindestens eine elektrische Stromleitung (2), die zu dem Knoten (S) afferent ist, zur Übertragung der, durch einen lokalen Generator (P) erzeugte elektrischen Energie in Wechselstrom, an den Knoten (S) angeschlossen ist. Der lokale Generator kann an eine separate Stromleitung angeschlossen werden, die mit dem Knoten verbunden ist, oder an dieselbe Stromleitung im Wechselstrom einer lokalen Speicherbatterie (AC) angeschlossen werden. Die digitale Datenaustauschleitung (6) ist auch mit dem lokalen Generator (P) und/oder auch mit der lokalen Speicherbatterie verbunden.

4. Logikschaltvorrichtung nach einem der Ansprüche 1, 2, 3, wobei mindestens eine an dem Knoten (S) afferente elektrische Stromleitung (5) bidirektional zum Übertragen und Sammeln elektrischer Energie im Wechselstrom geschaltet ist zu einem elektrischen Netzwerk (7), das aus der Mehrfachverbindung mehrerer Logikschaltvorrichtungen resultiert, die jeweils mit einer Logikplatine (SF) versehen sind, um in einem lokalen oder privaten Netzwerk Wechselstrom zu sammeln, mehrere Benutzer, die selbst Produzenten oder Sammler sind oder sogar einfache Verbraucher der im lokalen oder privaten Netz im Wechselstrom verfügbaren und gemeinsam genutzten elektrischen Energie.

5. Logikschaltvorrichtung nach Anspruch 4, wobei mehrere lokale oder private Netze (7) zum Austausch elektrischer Energie in Wechselstrom auf einer Stromleitung (9) miteinander verbunden sind, und für den Datenaustausch an eine Betriebsdatenaustauschleitung (10) jeder Logikschaltvorrichtung oder Logikplatine (SF), die verbunden ist, um ein proprietäres Netzwerk zu bilden, in dem die Erzeugung, die Speicherung und der Verbrauch der elektrischen Energie in Wechselstrom auf übliche Weise verwaltet werden auf der Grundlage der Logik der Verwaltung und Steuerung jeder im proprietären Netzwerk vorhandenen Logikplatine (SF); Die Verwaltung der Verbindung im Wechselstrom zwischen dem lokalen oder privaten Netzwerk und dem proprietären Netzwerk kann mittels einer Hauptlogikkarte (SFA, SFB ... SFN) zur Verwaltung einer höheren Ebene als der lokalen Ebene erfolgen.

6. Logikschaltvorrichtung gemäß einem der vorhergehenden Ansprüche, wobei auf einer der elektrischen Stromleitungen (3), die zu dem in der Logikplatine (SF) vorhandenen Knoten (S) afferent sind, das öffentliche Verteilungsnetz für elektrische Energie für eine bidirektionaler Austausch angeschlossen ist.

7. Verfahren zum Verwalten einer Logikschaltvorrichtung nach Anspruch 1, wobei die in der Logikplatine (SF) vorhandene elektronische Logik (LE) erfasst:
- auf der ersten Stromleitung (1) gesammelte Leistung, die sich auf eine sofortige Sammlung alternierender elektrischer Energie durch die elektrische (U) bezieht, die von dem entsprechenden Sensor (S1) geliefert wird;
- Energie, die auf der zweiten, dritten und vierten Stromleitung (2, 3, 5) der bidirektionalen Übertragungssammlung ausgetauscht wird, um die tatsächliche Leistung/Energie zu steuern, die für den Knoten (S) afferent ist;
- Abrufen von Daten zu den Status von anderen Logikplatinen (SF), auf lokaler oder entfernte Systeme, die mit Wechselstrom verbunden sind und über die Verbindungsleitung zum Datenaustausch (4, 8 oder 10) gelesen werden;
- So verarbeitet die Logikplatine mit der elektronischen Logik (LE) auf der Grundlage der gelesenen Werte und der Programmiereinstellung und steuert die Leistungsschalter (RI, R2, R3, R5) zum Anschließen oder Trennen.

8. Verfahren zum Verwalten einer Logikschaltvorrichtung nach Anspruch 7, wobei durch die Verwendung einer Logikschaltvorrichtung nach Anspruch 3 die Logikplatine (SF) mittels der elektronischen Logik (LE) auch erfasst:
- Ladestatus der Speichervorrichtung, gelesen durch die Logikleitung der internen Datenkommunikation (6), die mit dem Speicher (AC) verbunden ist;
- Produktion des lokalen Generators (P), Lesen durch die Logikleitung der internen Daten Kommunikation (6), die optional über den Speicher (AC) mit dem Generator (P) verbunden ist;
- zusätzliche Leistung/Energie, die im lokalen Speicher und/oder in der Produktion verfügbar ist und intern von der elektronischen Logik (LE) berechnet wird.

9. Verfahren zum Verwalten einer Logikschaltvorrichtung nach Anspruch 7, wobei durch die Verwendung einer Logikschaltvorrichtung nach Anspruch 2 die Logikplatine (SF) mittels der elektronischen Logik (LE) ebenfalls erfasst.
- Ladestatus der Speichervorrichtung, gelesen durch die Logikleitung der internen Datenkommunikation (6), die mit dem Speicher (AC) verbunden ist;
- zusätzliche Leistung/Energie im lokalen Speicher, die intern von der elektronischen Logik (LE) berechnet wird.

10. Verfahren zum Verwalten einer Logikschaltvorrichtung gemäß einem der vorhergehenden Ansprüche 7, 8 oder 9, wobei durch Verwendung einer Logikschaltvorrichtung Gemäß einem der Ansprüche 1, 2, 3, 4 oder 5 zeichnet die Logikplatine (SF) mittels der elektronischen Logik (LE) während des Betriebs die Zeiten und elektrischen Daten der Übertragung oder Sammlung elektrischer Energie auf jeder auf der elektrischen Stromleitungen (1 2, 3, 5) im Wechselstrom afferent zum Knoten (S) in geeigneten internen Registern in der elektronischen Logik.Darüber hinaus kommuniziert oder zeigt die Logikplatine (SF) für festgelegte Zeiträume (Tag, Woche, Monate, Jahr) bei der Verwaltung des lokalen/privaten/proprietären Netzwerks die Energiebilanz dieser internen Register mit einem Saldo von Energieaustausch des Benutzers über die Stromleitungen.

## Revendications

1. Appareillage de commutation logique (SF) pour gérer des sources d'énergie en courant alternatif et connecté au utilisateurs connectés comprenant: un circuit d'énergie électrique dans lequel une première ligne d'énergie électrique (1) pour la transmission de l'énergie électrique en courant alternatif est connectée à une charge électrique (U); une deuxième ligne d'énergie électrique (2) pour la transmission de l'énergie électrique en courant alternatif est connectée à une source d'énergie électrique (P); une troisième ligne d'énergie électrique externe (3) pour la transmission de l'énergie électrique en courant alternatif, qui est connectée de façon optionnelle au réseau public; un boitier logique électronique programmable (LE) configuré pour connecter ou déconnecter la connexion de puissance électrique entre les dites lignes en fonction de la programmation reçue; **caractérisé en cela qu**'il inclus une connexion d'au moins une quatrième ligne de puissance électrique (5) pour la transmission de l'énergie électrique en courant alternatif, venant d'une ligne ou source électrique externe, reliée aux précédentes en un nœud (S) de connexions électriques internes à l'appareillage de commutation logique; le boitier électronique logique configuré pour détecter l'état de chacune des première, deuxième, troisième et quatrième lignes de puissance électrique connectées au nœud avec une ligne de capteurs d'état (S1, S2, S3, S5), une pour chacune des première, deuxième, troisième et quatrième lignes, qui agissent comme des interrupteurs de déconnexion, de chaque ligne en courant alternatif afférente au dit nœud, chacune des dites lignes de capteurs d'état configurée pour détecter les paramètres électriques de la ligne de puissance correspondante, particulièrement puissante, et pour approvisionner la puissance détectée au boitier électronique logique; le boitier électronique logique configuré pour permettre la transmission ou la collecte d'énergie électrique à partir d'au moins deux des dites lignes de puissance électrique, c'est-à-dire, avec le nœud (S) le boitier électronique logique est configuré pour permettre et gérer l'échange bidirectionnel de l'énergie électrique sur au moins deux des dites lignes afférentes au nœud; les parties fonctionnelles de l'appareillage: nœud (S), interrupteurs (R1, R2, R3, R5), capteurs (S1, S2, S3, S5) processeur du boitier électronique logique (LE) sont rassemblés sur un seul tableau de contrôle logique (SF) sur lequel au moins une ligne de données digitales (4, 6) est connectée pour l'échange de données opératives entre le tableau de contrôle logique (SF) et au moins un autre tableau de contrôle logique (SF), similaire ou identique et interfaçable, présent et connecté pour l'échange de données opératives et pour l'échange bidirectionnel de l'énergie électrique en courant alternatif au moyen d'au moins une des dites lignes électriques avec une transmission-collecte d'énergie électrique en courant alternatif.

2. L'appareillage de commutation logique, selon la revendication 1, dans laquelle au moins une ligne électrique en courant alternatif (2) afférente au nœud (S) est connectée d'une façon bidirectionnelle pour la transmission-collecte de l'énergie électrique en courant alternatif à un appareil avec batterie de stockage (AC); la ligne digitale de données échangées (6) est aussi connectée à la batterie de stockage locale.

3. L'appareillage de commutation logique, selon les revendications 1, 2, dans lesquelles au moins une ligne électrique (2) afférente au nœud (S) est connectée pour la transmission au nœud (S) de l'énergie électrique en courant alternatif produit par un générateur local (P); le générateur local peut être connecté sur une ligne électrique séparée afférente au nœud ou relié à la même ligne électrique en courant alternatif d'une batterie de stockage locale (AC); la ligne d'échange de données numériques (6) est aussi connectée au générateur local (P) et/ou aussi à la batterie de stockage locale.

4. L'appareillage de commutation logique, selon les revendications 1, 2, 3, dans lesquelles au moins une ligne d'énergie électrique (5) afférente au nœud (S) est connectée de façon bidirectionnelle pour la transmission-collecte de l'énergie électrique en courant alternatif à un réseau électrique (7) résultant de multiples connexions de multiples appareillages de commutations logiques, chacun pourvu d'un tableau de contrôle logique (SF), pour permettre dans un réseau privé ou local en courant alternatif de multiples utilisateurs qui sont leur propre producteurs ou accumulateurs ou même de simples consommateurs de l'énergie électrique disponible et utilisée en commun sur un réseau local ou privé en courant alternatif.

5. L'appareillage de commutation logique, selon la revendication 4, dans laquelle de multiples réseaux locaux ou privés (7) sont interconnectés pour l'échange d'énergie électrique en courant alternatif sur une ligne électrique (9) et pour l'échange de données sur une ligne d'échange de données opératives (10) de chaque appareillage de commutation logique, ou tableau de contrôle logique (SF) connecté pour constituer un réseau propriétaire dans lequel la production, le stockage et la consommation de l'énergie électrique en courant alternatif sont gérés de façon commune sur la base de la logique de gestion et de contrôle de chaque tableau de contrôle (SF) présent sur le réseau propriétaire; la gestion de la connexion en courant alternatif entre le réseau local ou privé et le réseau propriétaire peut se produire au moyen d'un tableau de contrôle logique principal (SFA, SFB... SFN) de gestion d'un plus haut niveau que celui dit local.

6. L'appareillage de commutation logique, selon les précédentes revendications, sur lesquelles une des lignes électriques (3) afférente au nœud (S), présente sur le tableau de contrôle logique (SF), le réseau public de distribution de l'énergie électrique est connecté pour un échange bidirectionnel.

7. La méthode pour gérer un appareillage de commutation logique, selon la revendication 1, dans laquelle la logique électronique (LE) présente dans le tableau de contrôle logique (SF) détecte:
- La puissance collectée sur la première ligne électrique (1), relative à une collecte instantanée d'énergie électrique alternative par la charge électrique (U), fournie par le capteur correspondant (S1);
- La puissance échangée avec la transmission-collecte bidirectionnelle sur les deuxième, troisième et quatrième lignes électriques (2, 3, 5) pour contrôler l'énergie/la puissance effective afférente au nœud (S);
- L'obtention de données sur les états d'autres tableaux de contrôle logique (SF), sur des systèmes locaux ou à distance connectés au réseau en courant alternatif lus à travers la ligne de connexion pour l'échange de données (4, 8 ou 10);
- Puis le tableau de contrôle logique traite, avec la logique électronique (LE) sur la base des valeurs lues et sur la programmation des paramètres, et contrôle les interrupteurs de courant (R1, R2, R3, R5) pour la connexion ou la déconnexion.

8. La méthode pour la gestion de l'appareillage de commutation logique, selon la revendication 7, dans laquelle par l'usage d'un appareillage de commutation logique selon la revendication 3, le tableau de contrôle logique (SF) au moyen de la logique électronique (LE) détecte aussi:
- L'état de charge de l'appareillage de stockage, lu à travers la ligne logique de communication de données internes (6) connectée au stockage (AC);
- Production du générateur local (P), lue à travers la ligne logique de communication de données internes (6) connectée au générateur (P) optionnellement au moyen du stockage (AC)
- Energie/puissance additionnelle disponible dans le stockage local et/ou production calculée en interne par la logique électronique (LE).

9. La méthode pour la gestion d'un appareillage de commutation logique, selon la revendication 7, dans laquelle par l'usage d'un appareillage de commutation logique selon la revendication 2, le tableau de contrôle logique (SF) au moyen de la logique électronique (LE) détecte aussi:
- l'état de charge de l'appareillage de stockage, lu à travers la ligne logique de communication de données internes (6) connectée au stockage (AC);
- Energie/puissance additionnelle disponible dans le stockage local calculé en interne par la logique électronique (LE).

10. La méthode pour gérer un appareillage de commutation logique, selon les revendications précédentes 7, 8 ou 9, dans lesquelles l'usage d'un appareillage de commutation logique selon les revendications 1, 2, 3, 4, ou 5, le tableau de contrôle logique (SF) au moyen de la logique électronique (LE) enregistre, durant l'opération, les temps et les données électriques de transmission ou collecte de l'énergie électrique sur chacune des lignes d'énergie électrique (1, 2, 3, 5) en courant alternatif afférente au nœud (S) dans des registres internes adaptés dans la logique électronique; de plus, pour des périodes de temps établies (jour, semaine, mois, année) dans la gestion des réseaux locaux/privés/propriétaires, le tableau de contrôle logique (SF) communique ou montre la comptabilisation de l'énergie des dits registres internes avec une balance de l'échange de l'énergie de l'utilisateur sur les dites lignes d'énergie électrique.
